# EUROPÄISCHE PATENTANMELDUNG

(11) **EP 1 760 560 A2**
(43) Veröffentlichungstag der Anmeldung: **07.03.2007**
(21) Anmeldenummer: 06017698.9
(22) Anmeldetag: 25.08.2006
(51) Int. Cl.: G05B 19/06, G05B 19/10

(54) **Mechanisch programmierbare Schaltuhr**

(30) Priorität: 03.09.2005 DE 102005041945
(71) Anmelder: Theben AG, 72401 Haigerloch (DE)
(72) Erfinder: Halle, Rainer, 72358 Dormettingen (DE)
(74) Vertreter: Neymeyer, Franz

(57) **Zusammenfassung**

Die Erfindung betrifft eine mechanisch programmierbare Schaltuhr (1) mit einer programmierbaren Steuereinrichtung, die einen Mikroprozessor sowie einen elektronischen Speicher aufweist und durch welche zeitabhängige Schaltvorgänge steuerbar sind, wobei zur Vorgabe unterschiedlicher Schaltzeiten ein mechanisch manuell programmierbarer Programmträger (4) vorgesehen ist, dessen programmierte Schaltzeiten sensorisch erfassbar, der Steuereinrichtung übergebbar und dort speicherbar sind und wobei in der Steuereinrichtung Zeitinformationen ablegbar sind, aus welchen der Mikroprozessor konkrete Schaltzeitpunkte berechnet und über die Steuereinrichtung entsprechende Schaltvorgänge bewirkt. Zur Realisierung verschiedener Schaltprogramme bei möglichst einfacher Bedienbarkeit ist vorgesehen, dass der Programmträger (4) mehrere Programmbereiche (5, 6) aufweist, welche unabhängig voneinander manuell programmierbar sind und, dass die jeweilige Programmierung der Programmbereiche (5, 6) von unabhängigen, dem jeweiligen Programmbereich (5, 6) zugeordneten Schaltsensoren auslesbar ist und in einem Arbeitsspeicher als voneinander unabhängige Schaltzeiten ablegbar ist und, dass wenigstens ein Wahlschalter (14) vorgesehen ist, durch welchen die Schaltzeiten der einzelnen Schaltbereiche (5, 6) wahlweise verschiedenen Lastkreisen und/oder verschiedenen Wochentagen zum Bewirken eines Schaltvorgangs zuordenbar sind.

## Beschreibung

Die Erfindung betrifft eine mechanisch programmierbare Schaltuhr mit einer programmierbaren Steuereinrichtung, die einen Mikroprozessor sowie einen elektronischen Speicher aufweist und durch welche zeitabhängige Schaltvorgänge steuerbar sind, wobei zur Vorgabe unterschiedlicher Schaltzeiten ein mechanisch manuell programmierbarer Programmträger vorgesehen ist, dessen programmierte Schaltzeiten sensorisch erfassbar, der Steuereinrichtung übergebbar und dort speicherbar sind und wobei in der Steuereinrichtung Zeitinformationen ablegbar sind, aus welchen der Mikroprozessor konkrete Schaltzeitpunkte berechnet und über die Steuereinrichtung entsprechende Schaltvorgänge bewirkt.

Zeitschaltuhren der gattungsgemäßen Art sind in vielfältigen Ausgestaltungen aus dem Stand der Technik bekannt.

So ist zum Beispiel aus der EP 0 093 788 eine als Zeitschalteinrichtung bezeichnete Schaltuhr bekannt, welche mit einem kreisscheibenförmigen Programmträger versehen ist. Dieser Programmträger ist mit einem konzentrisch zu dessen Drehachse angeordneten, ringförmigen Bereich versehen, der eine Programmspur trägt. Des Weiteren ist hier eine Antriebseinrichtung zur Erzeugung einer zeitproportionalen Drehbewegung des Programmträgers um seine zentrale Drehachse vorgesehen. Zum Auslesen der Programmspur weist diese Schaltuhr eine optoelektronische Abtasteinrichtung auf, durch welche während der Rotation des Programmträgers dessen Programmspur ausgelesbar ist. Die eigentliche Programmierung auf der Programmspur erfolgt bei dieser Ausführungsform der Schaltuhr durch Auf- oder Abtragen eines Beschichtungsmittels, so dass die Programmspur unterschiedlich markierte Abschnitte aufweist. Die komplette Anordnung dieser Schaltuhr ist in einem Gehäuse aufgenommen. Mit dieser speziellen Ausführungsform ist im Bereich der Programmspur eine Halteeinrichtung mit einem Schreibelement vorgesehen, wobei diese Halteeinrichtung derart ausgebildet ist, dass das Schreibelement mittels dieser Halteeinrichtung mit dem auf der Antriebseinrichtung montierten Programmträger innerhalb des ringförmigen Bereichs in Eingriff gebracht werden kann. Dabei kann über diese Einrichtung das entsprechende "Zeitprogramm" in den ringförmigen Bereich des Programmträgers auf die Programmspuren geschrieben werden. Durch diese Ausgestaltung des Gegenstandes dieser EP-Schrift soll eine einfache, übersichtliche und hinreichend genaue Programmierung eines Programmträgers erzielbar sein. Dabei ist es jedoch nicht möglich eine sogenannte Wochenendprogrammierung oder eine Mehrkanalprogrammierung einer Schaltuhr zu realisieren. Ist eine solche Schaltuhr beispielsweise als Tageszeitschaltuhr ausgebildet, so sind hier nur Schaltprogramme programmierbar, welche für jeden Tage identisch sind. Weiter ist über diese Zeitschaltuhr jeweils nur ein Schaltkreis mit stets demselben Programm schaltbar.

Des Weiteren ist aus der DE 295 05 405 U1 eine sogenannte elektromechanische Schaltuhr mit veränderbarer Drehzahl der Programmierscheibe bekannt. Diese Schaltuhr besitzt ebenfalls eine Programmierscheibe in üblicher Bauart, die von einem Synchronmotor oder auch einem Schrittmotor über ein Rädergetriebe angetrieben wird. Zur Programmierung dieser Programmierscheibe sind steckbare Schaltreiter oder auch in ihrer Position verstellbare Schalthebel vorgesehen, über welche elektrische Leistungsschalter aktivierbar sind. Zur Steuerung von Schaltzeiten weist diese bekannte Schaltuhr eine Empfangseinrichtung mit Antenne zum Empfang eines zeitcodierten Sendesignals auf. Des Weiteren ist hier ein Mikroprozessor vorgesehen, welcher zur Gewinnung einer vollständigen Zeitinformation aus dem Empfangssignal der Empfangseinrichtung dient. Weiter wird durch diesen Mikroprozessor eine intermittierende Steuerung des Synchron- oder Schrittmotors bewirkt. Zur Ansteuerung dieses Motors ist eine elektronische Motorendstufe vorgesehen, durch welche eine leistungsgerechte Ansteuerung des Synchron- oder Schrittmotors bewirkt wird. Des Weiteren ist hier ein elektrisches Netzteil vorhanden, welches zur Spannungsversorgung sämtlicher elektronischer Baugruppen dient. Mit einer Programmschalteinrichtung ist der Mikrocontroler extern programmierbar, wobei auch hier Sensorbaugruppen beispielsweise in Form von Infrarotreflexsensoren und Miniaturspiegel zur Winkelstellungserkennung der Programmierscheibe eingesetzt werden.

Die elektronische Steuereinheit kontrolliert mittels der Sensoreinheit die Drehzahl der Programmierscheibe und vergleicht anhand der internen Zeithaltung auf Funkzeitbasis deren Genauigkeit. Werden beim Gegenstand der DE 295 05 405 Zeitabweichungen festgestellt, so veranlaßt der Mikroprozessor eine Korrektur der Motordrehzahl durch die Veränderung des Verhältnisses von Laufund Stillstandszeit des Synchron- oder Schrittmotors. Damit soll ein sehr zeitgenauer Lauf der Schaltuhr erzielt werden, der nicht mehr von der Genauigkeit der Netzfrequenz abhängig ist. Des Weiteren ist bei dieser Schaltuhr ein Wahlschalter vorgesehen, mittels welchem die elektronische Steuereinrichtung in unterschiedlicher Weise programmierbar ist. Dies wird durch geeignete Wahl des Verhältnisses von Lauf- und Stillstandzeit des Synchron- oder Schrittmotors erreicht und dementsprechend vom Mikroprozessor gesteuert. Ziel dieser Schaltuhr ist es, diese vom 24-Stunden-Betrieb auf ein Wochen-Programm umstellen zu können. Durch Umschalten des Schalters wird dementsprechend das Verhältnis von Stillstand und Laufzeit versiebenfacht, d.h. der Mikroprozessor schaltet die Motorendstufe und somit den Antriebsmotor in geeigneter Weise siebenmal weniger ein. Eine Wochendenprogrammierung, bei welcher andere Schaltzeiten beispielsweise für Samstag und Sonntag geschaltet werden sollen, ist auch hier nicht möglich. Hier sind lediglich unterschiedliche Drehzahlen der Programmierscheibe einstellbar. Da die elektronische Steuereinheit auch eine Wochentagsinformation aus dem kodierten Zeitsignal des Funkempfängers generiert, kann zum Beispiel die 24-Stunden-Schaltuhr in einer Programmvariante als Schaltuhr mit Wochenendautomatik verwendet werden. Dabei ist hier allerdings nicht vorgesehen, dass am Wochenende zu von den unter der Woche geltenden Schaltzeiten abweichende Schaltzeiten Schaltvorgänge bewirkt werden können. Die elektronische Steuereinheit unterdrückt hier lediglich die Drehung der Programmierscheibe, beispielsweise von Freitag 24.00 Uhr bis Sonntag 24.00 Uhr vollständig, so dass am Wochenende keine Schaltvorgänge bewirkt werden. Dies bedeutet wiederum, dass für weitere Schaltzeiten am Wochenende eine Umprogrammierung des Programmträgers in Form der Programmierscheibe erfolgen muss, um auch für Samstag und Sonntag andere Schaltzeiten mit derselben Schaltuhr erreichen zu können.

Weiter ist aus DE 101 59 010 A1 eine elektromechanische Schaltuhr bekannt, welche ebenfalls eine von einem Antrieb angetriebene um ihre Achse rotierende Programmschaltscheibe mit Schaltelementen an ihrem Umfang als Programmträger aufweist. Diese Schaltelemente sind, wie dies allgemein aus dem Stand der Technik bekannt ist, in mindestens zwei Schaltpositionen einstellbar. Dabei stellt die eine Schaltposition eines Schaltelementes den Einschaltzustand und dessen andere Schaltposition den Ausschaltzustand dar. Diese Schaltpositionen werden beim Gegenstand dieser bekannten Schaltuhr von einem Schalthebel abgetastet, der gelenkig gelagert ist. Durch die Schwenkbewegung dieses Schalthebels wird eine elektrische oder elektronische Baueinheit entsprechend aktiviert, so dass einer elektronischen Steuereinrichtung entsprechende Schaltsignale übergebbar sind. Weiter weist der Antrieb eine elektronische Steuerung und einen Getriebesensor auf, der eine Abschaltung des Antriebs bewirkt, sobald ein Sensorzähler in Abhängigkeit vom Betriebszustand der Schaltuhr eine einem oder mehreren Antriebszyklen entsprechende Drehbewegung eines mit dem Antrieb gekoppelten Getriebeteils erfasst hat. Diese bekannte Schaltuhr beinhaltet ebenfalls eine zeithaltende Einrichtung, wie sie beispielsweise bei Synchronuhren oder Quarzuhren mit Gangreserve bekannt ist. Durch diese Zeithaltung sind in der Steuerung sämtliche Zeitdaten, wie Sekunde, Minute, Stunde, Tag, Monat und Jahr abgelegt, so dass aus diesen Daten eine entsprechende Ansteuerung des Antriebes in Abhängigkeit von den durch den Getriebesensor gezählten Impulse möglich ist. D.h., beim Gegenstand dieser Schaltuhr wird eine Kombination von mechanischem Programmträger in Form einer Programmscheibe und einer elektronischen Ansteuerung mit Zeitinformationen eingesetzt, um den Antrieb stets auf die aktuelle Zeit einstellen zu können. Dabei ist es bei dieser Schaltuhr nicht mehr notwendig, eine Gangreserve vorzusehen, über welche der Antrieb über einen längeren Zeitraum bei Netzausfall weiter angetrieben wird, da der Antrieb über die elektronische Ansteuerung stets nach Netzwiederkehr auf die aktuelle Uhrzeit einstellbar ist. Dies erfolgt beispielsweise dadurch, dass der Antrieb in einem sogenannten Schnellgang der aktuellen Uhrzeit nachgeführt wird. Dementsprechend ist hier auch über eine entsprechende Antriebsansteuerung eine Sommer-/Winterzeit-Umstellung möglich.

Nicht möglich ist allerdings auch hier, eine separate Programmierung von separaten Schaltzeiten im Sinne einer Wochenendschaltung.

Weiter zeigt auch der Gegenstand der DE 296 14 311 U1 eine Zeitschaltuhr bzw. eine Vorrichtung zur Programmierung einer Zeitschaltuhr, bei welchem eine mechanisch programmierbare Programmscheibe mit Schaltreitern oder Schaltelementen eingesetzt wird. Auch hier wird eine Kombination eines mechanisch programmierbaren Programmträgers in Zusammenspiel mit einer elektronischen Auswerteeinrichtung verwendet. Dabei wird durch den manuell programmierbaren Programmträger das Schaltprogramm über eine Lesevorrichtung in einen elektronischen Speicher einer Steuereinrichtung eingelesen. Dieses Steuerteil enthält ebenfalls eine zeithaltende Einrichtung, über welche die tatsächlich aktuell vorliegenden Zeitdaten abrufbar sind. Dabei können auf dem Programmträger mechanische Programmierungsvorrichtungen in Form von codierten Schaltreitern für die aktuelle Uhrzeit und/oder die aktuelle Tages-, Wochen-, Monats- oder Jahreszeit vorgesehen sein. Auch bei dieser Art von Schaltuhr ist eine Wochenendprogrammierung, wie diese bei rein elektronischen Schaltuhren aus dem Stand der Technik bekannt ist, nicht vorgesehen und auch nicht durchführbar. Wird eine solche Schaltuhr mit Schaltscheibe mit ihrer "Segmentprogrammierung" als Wochenendschaltuhr eingesetzt, so liegt deren minimale Auflösung der erreichbaren Schaltzeiten bei 2 h. Sind kleinere Auflösungen für eine Wochenendschaltuhr gefordert, so muss ebenfalls eine rein elektronische Schaltuhr eingesetzt werden.

Weiter ist aus der DE 298 25 111 U1 ist eine programmierbare Schaltuhr bekannt, deren Programmträger aus einer Codekarte besteht. Diese Codekarte ist mit mehreren Codierelementen versehen, die in Zeilen und Spalten angeordnet sind. Diese Codierelemente können beispielsweise aus markierbaren Feldern oder aus in zwei Schaltpositionen verstellbaren Schaltelementen gebildet sein. In der DE 298 25 111 U1 sind noch einige weitere Varianten von Codierelementen beschrieben, so dass hier inhaltlich auf diese Druckschrift verwiesen wird. Die Codekarte ist in einen Führungsschacht eines Gehäuses der Schaltuhr einschiebbar, wobei die durch die Anordnung oder Markierung der aufeinanderfolgenden Codierelemente realisierte Programmierung während des Einschiebens ausgelesen wird. Zum Auslesen der Codierelemente ist eine Lesevorrichtung mit Lesesensoren vorgesehen, wobei jeder Zeile von Codierelementen ein solcher Lesesensor zugeordnet ist, durch welchen die jeweilige Zeile von Codierelementen abgetastet wird. Zur Auswertung der ausgelesenen Codierung weist diese bekannte Schaltuhr ebenfalls eine programmierbare Steuereinrichtung mit einem Mikroprozessor sowie einen elektronischen Speicher auf. Das durch die Codierelemente programmierte Schaltprogramm wird mittels einer Abfrageroutine sowie einer Arbeitsroutine mittels Zeitzählern abgearbeitet und als Schaltzeitprogramm in den Speicher eingelesen. Bei dieser Schaltuhr ist vorgesehen, dass durch mehrfache Betätigung einer Wahltaste unterschiedliche Funktionsarten wählbar sind. Dies kann ein Wochenprogramm, eine Tagesprogramm oder ein Stundenprogramm sein. Bei der Auswahl eines Wochenprogramms werden insgesamt sieben Zeilen mit jeweils 24 Codierelementen pro Zeile genutzt, so dass insgesamt 168 Codierelemente und eine dementsprechende Anzahl von höchstens 168 Schaltvorgängen durchführbar sind. Dies ergibt eine Auflösung von 1h je Codierelement. Weiter sind unterschiedliche Tagesprogramme wählbar, wobei die Anzahl der genutzten Zeilen stets kleiner als sieben ist. Werden nur sechs Zeilen genutzt, so beträgt die Anzahl der auszulesenden Codierelemente 144 und die Auflösung 10 min pro Schaltelement. Mit jeder Zeile sind somit Schaltzeiten innerhalb von vier Stunden über deren Codierelemente programmierbar. Durch Verringerung der genutzten Anzahl der Zeilen wird somit die Auflösung für eine Tagesprogrammierung immer größer, so dass bei Nutzung lediglich einer Zeile von Codierelementen eine Auflösung von nur noch 1h erreichbar ist. Hier kann zwar durch Auswahl der Funktionsart "Wochenprogramm" eine Art Wochenendprogrammierung erfolgen, jedoch nur mit einer Auflösung von 1h, da bei dieser Funktionsart jeder Zeile mit ihren 24 Codierelementen einem Wochentag zuzuordnen ist. Will man in kleineren Zeitabständen Schalten, so bleibt nur die Tagesprogrammierung mit einer kleinsten Schaltzeit von 10 min. Damit ist aber keine Wochenendprogrammierung mehr durchführbar, da die über die Codierelemente eingestellten Schaltzeiten täglich abgearbeitet werden.

Bei elektronischen Schaltuhren hingegen, bei welchen eine Wochenendprogrammierung oder ein Wochenprogramm mit variabler Tagesprogrammierung einstellbar ist, besteht der Nachteil, dass häufig die Bedienungsführung derart kompliziert ist, dass vom Endverbraucher umfangreiche Programmierungen nur mühsam oder gar nicht durchführbar sind. Dies liegt daran, dass die Programmierung stets über eine mehrteilige in mehreren Ebenen aufgebaute Bedienerführung erfolgen muss, das bei solchen rein elektronischen Schaltuhren in der Regel nur wenig Raum für eine komplette Tastatur und insbesondere für eine komplexe Anzeige der jeweils durchzuführenden Programmierung zur Verfügung steht.

Demgemäß liegt der Erfindung die Aufgabe zugrunde, eine mechanisch programmierbare Schaltuhr derart auszugestalten, dass verschiedene Schaltprogramme realisierbar sind, welche für unterschiedliche Zwecke abrufbar sind.

Die Aufgabe wird erfindungsgemäß dadurch gelöst, dass der Programmträger mehrere Programmbereiche aufweist, welche unabhängig voneinander manuell programmierbar sind und, dass die jeweilige Programmierung der Programmbereiche von unabhängigen, dem jeweiligen Programmbereich zugeordneten Schaltsensoren auslesbar ist und in einem Arbeitsspeicher als voneinander unabhängige Schaltzeiten ablegbar ist und, dass wenigstens ein Wahlschalter vorgesehen ist, durch welchen die Schaltzeiten der einzelnen Schaltbereiche wahlweise verschiedenen Lastkreisen und/oder verschiedenen Wochentagen zum Bewirken eines Schaltvorgangs zuordenbar sind.

Durch die erfindungsgemäße Ausgestaltung wird eine mechanisch programmierbare Schaltuhr zur Verfügung gestellt, bei welcher eine übersichtliche Programmierung der Schaltzeiten in einfachster Weise durchführbar ist. Hierzu ist ein Programmträger mit mechanisch manuell programmierbaren Elementen vorgesehen, deren Programmierfunktionen in einfachster Weise manuell veränderbar sind. Dazu sind erfindungsgemäß mehrere Programmbereiche vorgesehen, welche unabhängig voneinander manuell programmierbar sind. Auch diese Programmbereiche sind optisch einfach erfassbar, wie dies beispielsweise bei Schaltscheiben von Schaltuhren der herkömmlichen Art bekannt ist. Die in den Schaltbereichen mit unterschiedlichen Schaltzeiten programmierten Bereiche werden durch unabhängige Schaltsensoren ausgelesen, deren Schaltsignale der Steuereinrichtung übergeben werden. Aus den entsprechenden Signalen berechnet nun die Steuereinrichtung die gewünschten Schaltzeiten und aktiviert dementsprechend einen Schaltvorgang eines Verbrauchers. Dabei ist erfindungsgemäß weiter ein Wahlschalter vorgesehen, durch welchen die unterschiedlichen Schaltprogramme unterschiedlichen Funktionen zuordenbar sind. Zum einen ist hier vorgesehen, dass die unterschiedlichen Schaltzeiten wahlweise verschiedenen Lastkreisen zuordenbar sind. Dies bedeutet, dass hier beispielsweise durch Aufschalten des Wahlschalters auf den Schaltbereich das erste Schaltprogramm ausgewählt ist, um ein erstes elektromechanisches Schaltrelais zu einem ersten Verbraucher durchzuschalten. Das nächste Schaltprogramm kann durch entsprechende Wahl des Wahlschalters auf einen zweiten Lastkreis aufgeschaltet werden, so dass ein zweites Schaltrelais über die elektronische Steuereinrichtung aktivierbar ist und dementsprechend einen zweiten Verbraucher schaltet. Dabei ist der Wahlschalter derart ausgestaltet, dass jedes der unabhängig programmierten Schaltprogramme eines jeden Programmbereiches jedem Lastkreis unabhängig von der Zuordnung zu den anderen Lastkreisen zugeordnet werden kann.

Alternativ zu diesen Zuordnungen kann auch eine sogenannte Wochenendprogrammierung erfolgen. Dabei ist der Wahlschalter derart ausgestaltet, dass mittels diesem jedes der Schaltprogramme der einzelnen Programmierbereiche beliebig einem der Wochentage Montag bis Freitag und/oder Samstag und/oder Sonntag zuordenbar sind, so dass an diesen Tagen wahlweise dasselbe Schaltprogramm oder unterschiedliche Schaltprogramme ausgeführt werden. Dabei ist auch vorgesehen, dass sämtliche der Wochentage und das Wochenende wahlweise einem der Schaltprogramme eines der Schaltbereiche zuordenbar sind.

Es ist erkennbar, dass durch die Kombination des manuell programmierbaren Programmträgers mit seinen Programmbereichen in Verbindung mit der elektronischen Steuerung sowie der Sensorik einerseits eine äußerst einfache Programmierung durch den Endverbraucher erfolgen kann und andererseits jedoch eine äußerst einfache Anwahl bzw. Zuordnung der Programme zu entsprechenden Funktionen über den Wahlschalter möglich ist.

Gemäß Anspruch 2 kann hierzu weiter vorgesehen sein, dass die Programmbereiche des Programmträgers als erster und zweiter Programmbereich ausgebildet sind und, dass die jeweilige Programmierung der beiden Programmbereiche von zwei unabhängigen Schaltsensoren auslesbar ist und in einem Arbeitsspeicher als erste und zweite Schaltzeiten ablegbar sind und, dass wenigstens ein Wahlschalter vorgesehen ist, durch welchen die ersten und zweiten Schaltzeiten wahlweise verschiedenen Lastkreisen und/oder verschiedenen Wochentagen zum Bewirken eines Schaltvorgangs zuordenbar sind. Auch diese beiden Programmbereiche sind optisch einfach erfassbar, wie dies beispielsweise bei Schaltscheiben von Schaltuhren der herkömmlichen Art bekannt ist. Die in beiden Schaltbereichen mit unterschiedlichen Schaltzeiten programmierten Bereiche werden durch zwei unabhängige Schaltsensoren ausgelesen, deren Schaltsignale der Steuereinrichtung übergeben werden. Aus den entsprechenden Signalen berechnet nun die Steuereinrichtung die gewünschten Schaltzeiten und aktiviert dementsprechend einen Schaltvorgang eines Verbrauchers. Auch bei dieser Ausgestaltung mit "nur" zwei Programmbereichen ist vorgesehen, dass die unterschiedlichen Schaltzeiten wahlweise verschiedenen Lastkreisen zuordenbar sind. Dies bedeutet, dass hier beispielsweise durch Schalten des Wahlschalters "in eine Richtung" das erste Schaltprogramm ausgewählt ist, um ein erstes elektromechanisches Schaltrelais zu einem ersten Verbraucher durchzuschalten. Das zweite Schaltprogramm kann durch entsprechende Wahl des Wahlschalters auf einen zweiten Lastkreis aufgeschaltet werden, so dass ein zweites Schaltrelais über die elektronische Steuereinrichtung aktivierbar ist und dementsprechend einen zweiten Verbraucher schaltet. Alternativ zu diesen Zuordnungen kann auch hier eine vereinfachte Wochenendprogrammierung erfolgen. Dabei ist der Wahlschalter derart ausgestaltet, dass mittels diesem für das erste Schaltprogramm des ersten Programmierbereiches die Wochentage Montag bis Freitag zuordenbar sind, so dass an diesen Tagen stets dasselbe Schaltprogramm ausgeführt wird. Des Weiteren können über den Wahlschalter die im zweiten Programmierbereich eingestellten Schaltzeiten auf Samstag und Sonntag gelegt werden, so dass hier an diesen beiden Tagen andere Schaltzeiten durchführbar sind. Dabei ist auch hier vorgesehen, dass sämtliche der Wochentage und das Wochenende wahlweise einem der Schaltprogramme eines der Schaltbereiche zuordenbar sind.

Gemäß Anspruch 3 kann weiter vorgesehen sein, dass der Programmträger als Schaltscheibe ausgebildet ist und die beiden Programmbereiche der Schaltscheibe aus einer ersten und zweiten Schalteinheit bestehen, welche jeweils mit steckbaren Schaltreitern oder gleichmäßig am Umfang verteilt angeordneten Schaltelementen versehen sind. Diese Schaltelemente sind in unterschiedliche Schaltpositionen steckbar oder verstellbar. D.h., dass hier im Wesentlichen zwei miteinander kombinierte in Form von Schaltscheiben ausgebildete Programmträger vorgesehen sind, welche in der vom Stand der Technik bekannten einfachen Art und Weise für den Endverbraucher zum Einstellen von unterschiedlichen Schaltzeiten programmierbar sind. Durch die doppelte Anordnung dieser Schalteinheiten werden die beiden Programmbereiche gebildet, welche jeweils von einem entsprechenden Sensor in der üblichen Art und Weise ausgelesen werden und dessen Schaltsignale der Steuereinrichtung übergebbar sind.

Dabei können gemäß Anspruch 4 die Schalteinheiten eine einheitlichen Schaltscheibe bilden, welche drehbar in einem Gehäuse der Schaltuhr gelagert ist. Durch diese einheitlich Ausgestaltung der Schaltscheibe werden insbesondere die Herstellkosten erheblich verringert und auch die Baugröße der gesamten Schaltuhr in Grenzen gehalten.

Gemäß Anspruch 5 kann vorgesehen sein, dass die Schaltscheibe zur Erfassung ihrer Drehwinkelstellung und ihrer Drehbewegung eine kreisringförmige Codierung mit einem Drehsensor aufweist, dessen Messsignale dem Mikroprozessor der Steuereinrichtung zur Ermittlung der programmierten Schaltzeitpunkte zuführbar sind. Eine solche Ausgestaltung kann beispielsweise vorgesehen sein, wenn die Programmierung auf der Schaltscheibe über einen einmaligen Vorgang eingelesen werden soll. Dies bedeutet, dass beispielsweise auf der Schaltscheibe durch entsprechende Einstellung der Schaltelemente ihrer Schalteinheiten die jeweiligen Schaltzeitpunkte vorab eingestellt werden. Durch anschließende manuelle Drehung dieser Schaltscheibe um wenigstens 360° können nun die Schaltzeitpunkte in die Steuereinrichtung eingelesen werden. Aufgrund des Drehwinkelsensors, welcher eine Referenzpunkterkennung zum Erkennen der Nulluhrstellung aufweist, sind nun die programmierten Zeitabschnitte in Form von Winkelabständen erfassbar und können entsprechenden Zeitabschnitten zugeordnet werden. Durch die elektronische Steuerung, welche mit entsprechenden Zeitdaten, wie aktuelle Uhrzeit aktuelles Datum, vorab programmiert wurde, sind nun aus diesem einmaligen Einlesevorgang die Schaltzeitpunkte entsprechend berechenbar. Zur Drehwinkelerkennung können hierbei aus dem Stand der Technik bekannte Sensorsysteme beispielsweise mit einer inkrementalen Codierung oder mit einer mehrspurigen codierten Kreisteilung eingesetzt werden. Wird eine mehrspurige Kreisteilung eingesetzt, so weist der Drehsensor entsprechend mehrere "Leseköpfe" oder Einzelsensoren auf, über welche die einzelnen codierten Spuren auslesbar und der Steuereinrichtung übergebbar sind.

Gemäß Anspruch 6 kann vorgesehen sein, dass der erste Sensor im Umfangsbereich der ersten Schalteinheit und der zweite Sensor im Umfangsbereich der zweiten Schalteinheit angeordnet ist. Weiter sind die Schaltpositionen der Schaltreiter oder Schaltelemente während einer Umdrehung der Schalteinheiten von wenigsten 360° von den Schaltsensoren erfassbar und als Schaltsignal dem Mikroprozessor zuführbar. Durch diese Ausgestaltung ist eine äußerst einfache, einmalige Übergabe der Schaltzeiten an den Mikroprozessor bzw. die Steuereinrichtung durchführbar.

Alternativ zu dieser Ausgestaltung kann gemäß Anspruch 7 als Programmträger eine Codekarte vorgesehen sein, welche mit mehreren die Programminformationen in Form von manuell veränderbaren Markierungen enthaltenden, spaltenförmigen Programmbereichen versehen ist, wobei die Codekarte in ein Einschubfach der Schaltuhr einschiebbar ist. Innerhalb des Einschubfaches ist jedem Programmbereich ein Schaltsensor zugeordnet, durch welche während des Einschiebens der Codekarte die Programmierung auslesbar und an die Steuereinrichtung übergebbar ist. Auch dieser Programmträger ist vom Endverbraucher beispielsweise durch Markieren von vorgegebenen Markierungsbereichen auf der Codekarte in einfachster Weise programmierbar.

Der Wahlschalter kann dabei gemäß Anspruch 8 als auf der Codekarte angebrachte und manuell veränderbare Wochentagcodierung und einem zugehörigen, die Codierung auslesenden Tagessensor gebildet sein. Diese Wochentagcodierung kann hier beispielsweise aus paarweise nebeneinander und in einer Spalte parallel zu den Programmbereichen angeordneten Markierungsfeldern bestehen, welche derart markierbar sind, dass unterschiedliche Wochentage wahlweise einem der beiden Schaltprogramme der beiden Programmbereiche zuordenbar sind. Dabei wird diese Wochentagcodierung ebenfalls beim Einschieben der Codekarte in das Einschubfach der Schaltuhr vom Tagessensor ausgelesen und dessen Signale an die Steuereinrichtung übergeben, so dass die gewünschten Schaltvorgänge zu den gewünschten Wochentagen aktivierbar sind. Anstatt solcher Markierungsfelder können auch in ihrer Position veränderbare Stellelemente vorgesehen sein, die in Einschubrichtung hintereinander angeordnet sind und deren Position vom Tagessensor erfassbar ist. Zur Positionsveränderung sind hier beispielsweise Schiebe- oder Klappelemente vorstellbar. Eine solche Ausgestaltung kann auch für die Markierungen gemäß Anspruch 7 vorgesehen sein.

Zur eindeutigen Zuordnung der Markierungen für die Schaltzeiten und für die Wochentagcodierung kann gemäß Anspruch 9 vorgesehen sein, dass die Codekarte eine spaltenförmig angebrachte Strichcodierung aufweist, welche durch einen im Einschubfach angeordneten Synchronisationssensor während des Einschiebens auslesbar und der Steuereinrichtung als Referenzsignal zur Berechnung der Schaltzeiten übergebbar ist.

Eine solche Zuordnung der Markierungen kann auch ohne die Merkmale des Anspruches 9 erreicht werden, indem beim Einschieben der Codekarte beispielsweise die hintereinander liegenden Markierungen gezählt werden. Der Steuereinrichtung ist dabei die Anzahl der vorhandenen Markierungen vorgebbar. Durch einen Vergleich der gezählten Markierungen und der vorgegebenen Anzahl ist bei Übereinstimmung ebenfalls eins eindeutige Zuordnung der Markierungen zu bestimmten Schaltzeiten berechenbar. Liegt keine Übereinstimmung vor, so ist vorgesehen, dass die Schaltuhr dies dem Benutzter beispielsweise durch ein optisches oder akustisches Signal anzeigt, so dass der Programmiervorgang durch erneutes Einschieben der Codekarte zu wiederholen ist.

Gemäß Anspruch 10 kann vorgesehen sein, dass eine automatische Sommer/-Winterzeit-Umschaltung vorgesehen ist. Eine solche Sommer/-Winterzeit-Umschaltung kann durch eine entsprechende Programmierung der Steuereinrichtung erreicht werden. Eine solche Ausgestaltung ist für die Fälle vorteilhaft, bei welchem Schaltvorgänge in Abhängigkeit von uhrzeitabhängigen Tagesabläufen zu bewirken sind. Beispielsweise ist eine Heizung zur Warmwasserbereitung im Sommer früher zu aktivieren als im Winter. Durch die automatische Sommer/-Winterzeit-Umschaltung wird dies automatisch erreicht, ohne dass der Benutzer irgendwelche Zeiteinstellungen korrigieren muss.

Gemäß Anspruch 11 kann vorgesehen sein, dass die automatische Sommer/-Winterzeit-Umschaltung wahlweise aktivierbar und deaktivierbar ist. Durch diese Ausgestaltung ist die erfindungsgemäße Schaltuhr den jeweiligen Einsatzerfordernissen in einfacher Weise anpassbar. Wird durch die Schaltuhr nicht eine Heizungsanlage, sondern eine beispielsweise Außenbeleuchtung gesteuert, so sind die Schaltzeitpunkte von der Helligkeit abhängig und nicht von der Sommer- oder Winterzeit. Ist ein solcher beispielhaft genannter Einsatz vorgesehen, so kann die Sommer/-Winterzeit-Umschaltung deaktiviert werden.

Anhand der Zeichnung wird nachfolgend die Erfindung beispielhaft näher erläutert. Es zeigt:
- Fig. 1: eine perspektivische Frontansicht einer erfindungsgemäßen Schaltuhr, mit einem aus einer mit zwei Programmbereichen versehenen Schaltscheibe bestehenden Programmträger;
- Fig. 2: einen Querschnitt durch die Schaltscheibe der Schaltuhr aus Fig. 1 mit ihren zwei verschiedenen Programmbereichen;
- Fig. 3: eine prinzipielle Draufsicht auf die Schaltscheibe der Schaltuhr aus Fig. 1 mit der prinzipiellen Anordnung von Schaltsensoren;
- Fig. 4: ein Schaltbild einer Schaltuhr der erfindungsgemäßen Art mit elektromotorischem Antrieb;
- Fig. 5: eine Schaltuhr der erfindungsgemäßen Art in einer Ausführungsform ohne elektromotorischen Antrieb der Schaltscheibe;
- Fig. 6: ein Schaltbild einer erfindungsgemäßen Zweikanalschaltuhr, mittels welcher zwei Schaltkreise separat ansteuerbar sind;
- Fig. 7: eine mit verschiedenen Programmbereichen versehene Codekarte in Draufsicht zusammen mit einer prinzipiellen Darstellung eines Einschubfaches einer erfindungsgemäßen Schaltuhr;

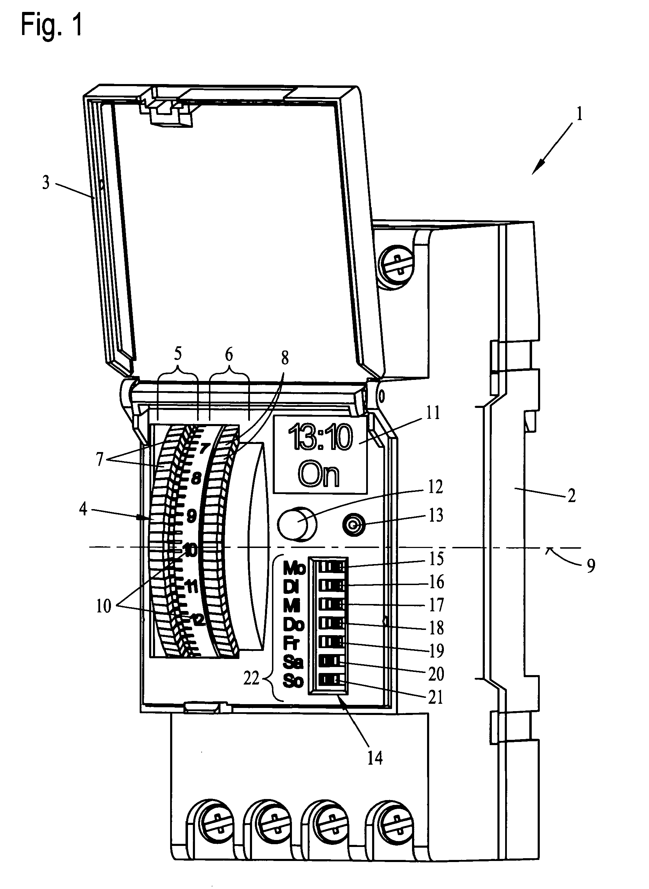

Fig. 1 zeigt eine perspektivische Darstellung eines Ausführungsbeispiels einer erfindungsgemäßen Schaltuhr 1. Diese Schaltuhr 1 weist ein in einem Schaltschrank einsetzbares Gehäuse 2 auf, welches Frontseitig mit einer klappbaren Abdeckung 3 versehen ist. Die Grundform einer solchen Schaltuhr ist gemeinhin aus dem Stand der Technik bekannt.

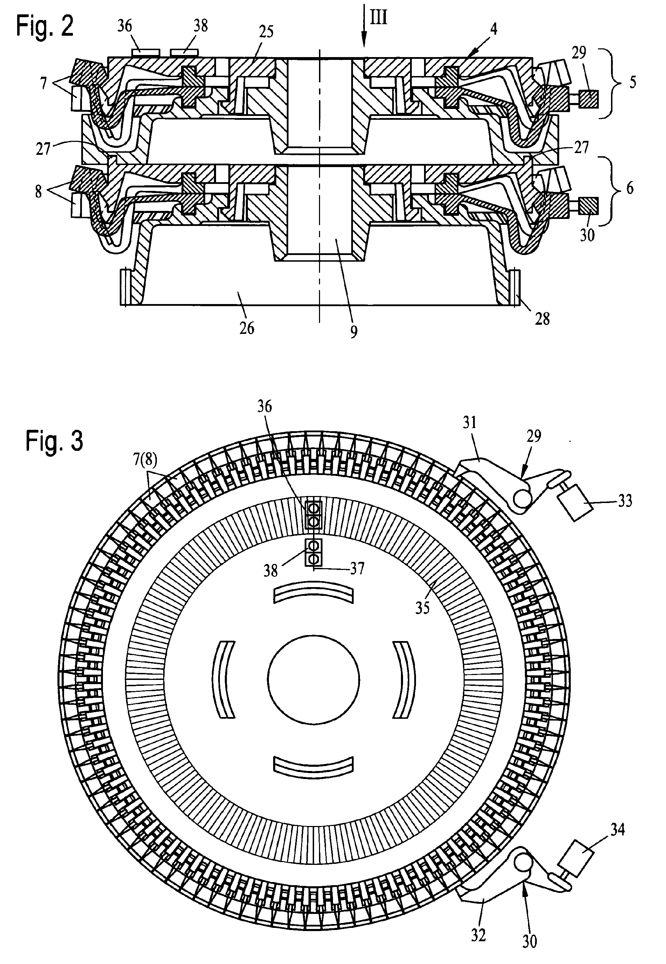

Beim vorliegenden Ausführungsbeispiel ist die Schaltuhr 1 mit einem Programmträger in Form einer Schaltscheibe 4 versehen. Diese Schaltscheibe 4 weist zwei Programmbereiche 5 und 6 auf, welche beim vorliegenden Ausführungsbeispiel aus zwei Gruppen von Schaltelementen 7 und 8 gebildet sind. Die Schaltscheibe 4 ist um eine quer zum Gehäuse 2 verlaufende Drehachse 9 drehbar im Gehäuse 2 gelagert und weist beim vorliegenden Ausführungsbeispiel zwischen den Schaltelementen 7 und 8 einen Anzeigebereich 10 auf, auf welchem Uhrzeitinformationen in Form von entsprechenden Zahlen aufgedruckt sind. Die Schaltelemente 7 sind einzeln, wie dies aus dem Stand der Technik bekannt ist, in Richtung der Drehachse 9 in zwei unterschiedliche Schaltpositionen verstellbar, wie weiter unten zu Fig. 2 näher ausgeführt wird.

Die Schaltscheibe 4 mit ihren beiden Programmbereichen 5 und 6, welche mechanisch miteinander gekoppelt sind, ist über einen in der Zeichnung nicht näher dargestellten Motor und ein Getriebe drehend antreibbar. Anstatt eines solchen drehenden Antriebes kann die Schaltscheibe 4 auch frei drehbar im Gehäuse 2 gelagert sein.

Des Weiteren ist beim vorliegenden Ausführungsbeispiel eine Digitalanzeige 11 vorgesehen, mittels welcher beispielsweise die aktuelle Uhrzeit, das aktuelle Datum und diverse Betriebszustände und/oder Schaltzustände der Schaltuhr optisch darstellbar sind. Des Weiteren weist die erfindungsgemäße Schaltuhr eine Taste 12 auf, über welchen die Schaltuhr 1 beispielsweise in verschiedene Betriebszustände, wie Dauernd-EIN, Dauernd-AUS oder Automatikbetrieb umschaltbar ist. Weiter ist beim vorliegenden Ausführungsbeispiel noch eine Resettaste 13 vorgesehen, mittels welcher die Zeitschaltuhr 1 in einen werksseitig vorprogrammierten Ursprungszustand zurückgestellt werden kann und in Kombination mit der Taste 12 beispielsweise das Datum und die Uhrzeit geändert werden können. Weiter ist aus Fig. 1 erkennbar, dass die Schaltuhr 1 mit einem Wahlschalter 14 versehen ist, welcher beim vorliegenden Ausführungsbeispiel aus insgesamt sieben separat schaltbaren Schaltelementen 15, 16, 17, 18, 19, 20 und 21 beispielsweise nach Art eines DIP-Schalters gebildet wird.

Seitlich neben den Schaltelementen 15 bis 21 ist diesen eine Beschriftung 22 zugeordnet, durch welche die einzelnen Wochentage - Montag bis Sonntag - gekennzeichnet sind. Dabei ist jedem der Schaltelemente 15 bis 21 jeweils ein Wochentag Montag, Dienstag, Mittwoch, Donnerstag, Freitag, Samstag und Sonntag eindeutig zugeordnet.

Die Schaltelemente 15 bis 21 des Wahlschalters 14 sind beim vorliegenden Ausführungsbeispiel parallel zur Drehachse 9 der Schaltscheibe 4 wahlweise in eine linke oder rechte Stellung bringbar. Durch die Verstellung dieser Schaltelememte 15 bis 21 beispielsweise in die linke Schaltstellung, wird durch diese die über die Schaltelemente 7 des Programmbereiches 5 gewählte bzw. eingestellte Programmierung den entsprechenden, den Schaltelementen 15 bis 21 zugeordneten Wochentagen zugeordnet. Befinden sich die Schaltelemente 15 bis 21 in ihrer rechten Stellung, so wird diesen die über die Schaltelemente 8 des Programmbereiches 6 eingestellte Programmierung zugeordnet.

Es ist erkennbar, dass durch die Einstellung der Schaltelemente 15 bis 21 des Wahlschalters 14 wahlweise entweder das Schaltprogramm des Schaltbereiches 5 oder das Schaltprogramm des Schaltbereiches 6 einem bestimmten dem jeweiligen Schaltelement 15 bis 21 zugeordneten Wochentag zuordenbar ist. Damit läßt sich in äußerst einfacher Weise und bei einer äußerst einfachen Bedienung der Schaltuhr 1 eine Wochenendprogrammierung realisieren.

Dies geschieht beispielsweise derart, dass zunächst für die Werktage Montag bis Freitag, die Schaltelemente 7 des Schaltbereiches 5 auf entsprechende Schaltzeiten programmiert werden und die entsprechenden, mit den entsprechenden Kürzeln Mo, Di, Mi, Do, Fr markierten Schaltelemente 15, 16, 17, 18 und 19 in ihre linke Schaltstellung gebracht werden. Damit sind die Zeitschaltpunkte der im Programmbereich 5 eingestellten Schaltzeiten den Tagen Montag bis Freitag zugeordnet. Im weiteren sind im Programmbereich 6 die Schaltelemente 8 in ihre entsprechende Schaltstellung bringbar, welche wiederum den gewünschten Schaltzeiten am Wochenende entsprechen, wobei die Schaltelemente 20 und 21 für Sa und So in die rechte Schaltstellung gebracht werden, so dass die Schaltzeiten des Programmbereiches 6 den Tagen Samstag und Sonntag und somit dem Wochenende zugeordnet sind.

Sind noch weitere Programmbereiche in Achsrichtung der Drehachse 9 neben den dargestellten Programmbereichen 5 und 6 vorgesehen, so sind die Schaltelemente 15 bis 21 entsprechend der Anzahl der insgesamt vorgesehenen Programmbereiche in entsprechende Position schaltbar. Dadurch kann jedes der Schaltprogramme der einzelnen Programmbereiche wahlweise jedem Wochentag zugeordnet werden.

Durch diese erfindungsgemäße Ausgestaltung sind in einfacher Art und Weise Wochenendprogrammierungen mit unterschiedlichen Schaltzeiten beispielsweise für die Arbeitstage Montag bis Freitag und die Wochenendtage Samstag und Sonntag programmierbar. Dabei ist eine Umstellung von gleichen Schaltzeiten für alle Tage, beispielsweise im Sinne einer Urlaubsprogrammierung durch einfaches Verstellen der Schaltelemente 15 bis 21 des Wahlschalters 14 möglich, da hierzu lediglich beispielsweise alle Schaltelemente in ihre rechte Stellung gebracht werden und die Wochenendprogrammierung des Programmbereiches 6 für alle Wochentage gilt. Auch können einzelne Arbeitstage der Wochendprogrammierung durch einfaches Umschalten des jeweiligen Schaltelementes 15 bis 18 dem Programmbereich 6 zugeordnet werden, was beispielsweise bei einem Feiertag wünschenswert sein kann. Je nach den Einsatzerfordernissen kann beispielsweise der Programmbereich 6 oder einer der evtl. weiteren vorgesehen Programmbereiche auch zur Schaltung Dauernd-AUS genutzt werden.

Es ist auch vorgesehen, dass die Schaltelemente 15 bis 21 in zwei weitere Stellungen über die Anzahl der Programmbereiche hinaus verstellbar sein können, so dass die zwei weiteren Schaltstellungen der Schaltelemente 15 bis 21 zur Schaltung von Dauernd-EIN und Dauernd-Aus genutzt werden können.

Anstatt der als Schiebeschalter ausgebildeten Schaltelemente 15 bis 21 des Wahlschalters 14 können auch Druckschalter vorgesehen sein, durch deren Betätigung ein Umschalten beispielsweise vom Programmbereich 5 auf den Programmbereich 6 durchführbar ist. Der jeweils vorliegende Schaltzustand und deren Zuordnung zum jeweiligen Wochentag kann dabei in der Digitalanzeige 11 angezeigt werden.

In die Schaltuhr 1 ist eine digitale Uhr mit Datum integriert, so dass es nicht erforderlich ist, bei Netzausfall die Schaltscheibe 4 weiter anzutreiben, um die Uhrzeit beizubehalten. Durch diese Ausgestaltung ist es weiter möglich, einen Schrittmotor zu verwenden, der einen wesentlich schlechteren Wirkungsgrad hat, als die bekannten Motoren aus den Schaltuhren mit Quarzantrieb, bei welchen die Schaltscheibe bei Netzausfall von einem kleinen Akku weiter antrieben werden muss. Bei Netzwiederkehr ist es somit möglich, aufgrund der erfassten und errechneten Motorimpulse, solche Motorimpulse in erhöhter Frequenz an den Motor auszugeben, so dass dieser im Eilgang die Schaltscheibe auf die aktuelle Uhrzeit einstellt. Durch diese Ausgestaltung ist es weiter auch möglich, Schaltungen nach dem Stromausfall im Eilgang zu durchlaufen und zu schalten oder aber Schaltungen zu unterdrücken.

In gleicher Art und Weise kann über die integrierte digitale Uhr auch eine vorprogrammierte Umschaltung von Sommer- auf Winterzeit erfolgen, ohne dass hierbei die über die Programmbereiche 5 und 6 bzw. deren Schaltelemente 7 und 8 gewählte Programmierung beeinflußt wird. Dabei ist erfindungsgemäß vorgesehen, dass zur Erfassung der programmierten Schaltzeiten in den Programmbereichen 5 und 6, in Fig. 1 nicht näher dargestellte Schaltsensoren vorgesehen ist, über welche die Schaltzeiten erfassbar und einer elektronischen Steuerung der Schaltuhr übergeben werden. Diese Schaltzeiten werden in einem Mikroprozessor der Steuereinrichtung erfasst und gespeichert. Aus einem Vergleich der übergebenen Schaltzeiten und der Daten der digitalen Uhrzeit und der aus den Daten abgeleiteten Wochentagsinformationen können somit durch den Mikroprozessor die tatsächlichen Zeitschaltzeiten präzise errechnet und entsprechend sekundengenau Schaltvorgänge aktiviert werden. Hier kann es sinnvoll sein, der mechanischen Schaltung, die größere Toleranzen aufweisen kann, einen gewissen zeitlichen Vorlauf zu geben.

Dabei kann vorgesehen sein, dass, wie bereits oben erwähnt, die Schaltscheibe 4 permanent angetrieben wird, so dass die Programmierung der Schaltbereiche 5 und 6 während des Betriebes ständig abgefragt und deren Schaltsignale an den Mikroprozessor bzw. die Steuereinrichtung weiter gegeben werden.

Alternativ hierzu kann auch vorgesehen sein, dass die Schaltscheibe 4 nicht motorisch angetrieben ist, sondern lediglich frei drehbar im Gehäuse 2 aufgenommen wird.

In dieser Ausführungsform werden zunächst die beiden Programme in den Programmbereichen 5 und 6 durch entsprechendes Verstellen der Schaltelemente 7 und 8 unabhängig voneinander eingestellt. Durch Betätigen beispielsweise der Taste 12 ist nun die Schaltuhr 1 in einen Programmiermodus umschaltbar, in welchem die programmierten Schaltzeiten 5 und 6 erfassbar sind. Hierzu wird in diesem Programmiermodus die Schaltscheibe 4 manuell von Hand gedreht, so dass die programmierten Schaltzeiten während einer Drehung von wenigstens 360° einmalig an den Mikroprozessor übergeben und dort gespeichert werden. Durch anschließende Umschaltung über die Taste 12 in einen Betriebsmodus können nun die erfassten Schaltzeiten abgearbeitet und in Abhängigkeit von der tatsächlichen Uhrzeit und der aus dem Datum abgeleitete Wochentagsinformationen der digitalen Uhr zur Berechnung der gewünschten Schaltzeiten herangezogen werden.

Alternativ kann der Programmiermodus, anstatt durch die Betätigung der Taste 12, auch automatisch durch das Erfassen der Drehung der Schaltscheibe 4 aktivierbar sein. D.h. durch Drehen der Schaltscheibe 4 und Auslösen mindestens eines Referenzimpulses wird automatisch in den Programmiermodus gewechselt. Hierzu kann auf der Schaltscheibe 4 eine Referenzmarkierung vorgesehen sein, die bei der Drehung der Schaltscheibe 4 von einem Referenzsensor erfassbar ist. Nachdem die Schaltscheibe um wenigstens 360° gedreht wurde, d.h. die Referenzmarkierung ein zweites Mal vom Referenzsensor erfasst wurde, wird wiederum automatisch in den Betriebsmodus gewechselt. Eine solche Referenzmarkierung ist allerdings nicht zwingend erforderlich. Bei Drehung der Schaltscheibe 4 wird dies auch durch im Umfangsbereich der Schaltscheibe 4 angeordnete Schaltsensoren erfasst, so dass auch hieraus ein Programmiermodus ableitbar ist. Nachdem der Schaltsensor wiederum dieselbe Schaltzeit erfasst, wird in diesem Falle automatisch in den Betriebsmodus gewechselt.

Fig. 2 zeigt einen Vertikalschnitt der Schaltscheibe 4 mit ihren beiden Programmbereichen 5 und 6. Dabei ist erkennbar, dass beim vorliegenden Ausführungsbeispiel die beiden Programmbereiche 5 und 6 jeweils eine separate Schalteinheit 25 und 26 bilden, welche beispielsweise über eine Zapfenverbindung 27 drehfest, mechanisch miteinander gekoppelt sind. Bei vorliegenden Ausführungsbeispiel trägt die Schalteinheit 26 eine Außenverzahnung 28, über welchen die komplette Schaltscheibe 4 drehend um ihre Drehachse 9 antreibbar ist.

Des Weiteren ist erkennbar, dass sowohl die Schaltelemente 7 des Programmbereiches 5 als auch die Schaltelemente 8 des Programmbereiches 6 variabel parallel zur Drehachse 9 in zwei unterschiedliche Schaltpositionen verstellbar sind.

Auf der rechten Seite der Fig. 2 ist im Umfangsbereich jedes Schaltbereiches 5 bzw. 6 ein Schaltsensor 29 bzw. 30 vorgesehen, durch welchen die Schaltpositionen der Schaltelemente 7 bzw. 8 des jeweiligen Schaltbereiches 5 bzw. 6 erfassbar und einer elektronischen Steuereinrichtung mit Mikroprozessor zuführbar sind.

Wie aus Fig. 3 ersichtlich ist, welche eine Draufsicht III aus Fig. 2 der Schaltscheibe 4 darstellt, können zur Abtastung der Stellung der Schaltelemente 7 und 8 Tasthebel 31 und 32 vorgesehen sein, welche zusammen beispielsweise mit einem entsprechend zugeordneten Mikroschalter 33 bzw. 34 die beiden Schaltsensoren 29 und 30 bilden. Bei der Darstellung in Fig. 3 sind die beiden Schaltsensoren 29 und 30 am Umfang der Schaltscheibe 4 versetzt angeordnet. Dies ist nicht zwingend erforderlich, für die Darstellung jedoch übersichtlicher.

Des Weiteren ist aus Fig. 3 ersichtlich, dass die Schaltscheibe 4 eine kreisringförmige Codierung 35 aufweist, mittels welcher die Drehbewegung der Schaltscheibe 4 erfassbar ist. Hierzu ist ein Drehsensor 36 vorgesehen, welcher unmittelbar im Bereich dieser kreisringförmigen Codierung 35 angeordnet ist, wie dies auch aus Fig. 2 ersichtlich ist.

Zur Ermittlung eines Referenzpunktes kann der Strichcodierung 35 eine Referenzmarkierung 37 zugeordnet sein, deren Position über einen ortsfesten Referenzsensor 38 auslesbar ist. Auch dieser Referenzsensor 38 ist unmittelbar oberhalb der äußeren Stirnfläche der Schaltscheibe 4 angeordnet, wie dies aus Fig. 2 beispielhaft ersichtlich ist.

Es ist leicht vorstellbar, dass bei Drehung der Schaltscheibe 4 um ihre Drehachse 9 (Fig. 2) über die Strichcodierung 35 sowie die Referenzmarkierung 37 die Drehbewegung der Schaltscheibe 4 in eine beispielsweise über ein Drehgesperr (in der Zeichnung nicht explizit dargestellt) definierte Richtung eindeutig erfassbar ist. Dabei wird vom Drehsensor 36 die eigentliche Drehbewegung und vom Referenzsensor 38 während einer Umdrehung die Drehwinkelpositionen der Schaltscheibe 4 erfasst und an eine elektronische Steuerung zur Berechnung von Schaltzeiten übergeben. Die Strichcodierung 35 mit ihrer Referenzmarkierung 37 zusammen mit den Drehsensor 36 und dem Referenzsensor 38 kommen insbesondere bei einer nicht motorisch angetriebenen Schaltscheibe 4 zum Einsatz. Soll die Drehbewegung der Schaltscheibe 4 in beide Drehrichtungen zugelassen werden, so ist ein weiterer Sensor zur Drehrichtungserkennung erforderlich.

Dabei wird im Programmiermodus die Schaltscheibe 4 nach der Programmiereinstellung der Schaltelemente 7 und 8 zunächst soweit gedreht, bis durch den Referenzsensor 38 über die Referenzmarkierung 37 die Referenzlage ermittelt wurde. Unmittelbar daran schließt sich eine Drehwinkelmessung über den Drehsensor 36 und die Strichcodierung 35 an, welche während der weiteren Drehung ständig an den Mikroprozessor bzw. die Steuereinrichtung entsprechende "Drehwinkelsignale" abgibt. Während dieser Drehung geben nun die über die Tasthebel 31 und 32 aktivierten und deaktivierten Mikroschalter 33 und 34 bei entsprechender Winkelstellung entsprechende Schaltsignale an die Steuereinrichtung ab, so dass diese aufgrund der Strichcodierung 35 bestimmten Drehwinkeln zuordenbar sind. Diese Drehwinkel entsprechen wiederum bestimmten Schaltzeiten, wie diese durch den Anzeigebereich 10 auf der Schaltscheibe 4 in Fig. 1 dargestellt sind. Nach einmaligem Durchlauf der Schaltscheibe zumindest über 360° sind nun sämtliche Daten an die Steuereinrichtung bzw. den Mikroprozessor übergeben, so dass dieser daraus die entsprechenden Schaltzeitpunkte berechnen und entsprechende Schaltvorgänge aktivieren kann.

Anstatt der dargestellten inkrementalen Lösung, ist auch eine absolute Drehwinkelcodierung denkbar, bei welcher die Zuordnung der Schaltsignale sofort erfolgt.

Generell sind aber auch Lösungen denkbar, bei welchen eine kreisförmige Codierung in anderer Weise abgetastet wird. Hier kann, je nach Ausbildung der Codierung, auch eine mechanische, optische, magnetische oder jede andere geeignete Abtastung erfolgen. Dies gilt auch für die Erfassung der Stellung der Schaltelemente 7 und 8 der Schaltbereiche 5 und 6 der Schaltscheibe 4.

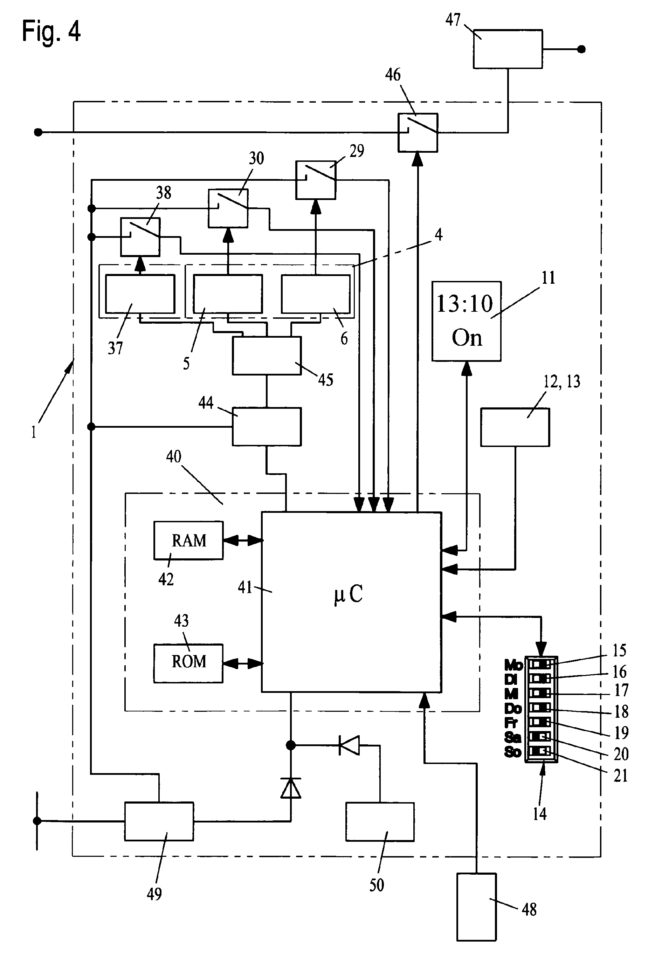

Fig. 4 zeigt ein Schaltbild einer Schaltuhr, bei welcher eine Schaltscheibe 4, wie diese in den Fig. 1 bis 3 dargestellt ist, motorisch angetrieben ist.

Diese Schaltungsanordnung umfasst eine Steuereinrichtung 40 mit einem Mikroprozessor 41, welchem wiederum ein flüchtiger Arbeitsspeicher 42 (RAM) sowie ein nichtflüchtiger Arbeitsspeicher 43 (ROM) zugeordnet ist.

Im nichtflüchtigen Arbeitsspeicher 43 können beispielsweise Daten einer Digitaluhr abgespeichert sein. Der flüchtige Arbeitsspeicher 42 dient zum Abspeichern der in den Schaltbereichen 5 und 6 programmierten Schaltzeiten.

Des Weiteren wird über den Mikroprozessor eine Motoransteuerung 44 angesteuert, über welche wiederum eine Motor-Getriebe-Einheit 45 aktivierbar ist. Durch diese Motor-Getriebe-Einheit wird die Schaltscheibe 4 mit ihren beiden Programmbereichen 5 und 6 sowie ihrer Referenzmarkierung 37 drehend angetrieben. Beim vorliegenden Ausführungsbeispiel kann zum Stellen der Schaltscheibe 4 der Motor im Schnelllauf vorwärts drehen oder stehen bleiben.

Wie aus Fig. 4 ersichtlich ist, ist den beiden Programmbereichen 5 und 6 jeweils der Schaltsensor 29 bzw. 30 zugeordnet, über welchen dem Mikroprozessor 41 entsprechende Schaltzeitpunktinformationen übermittelt werden. Zur Festlegung beispielsweise einer 0:00-Uhr-Information dient bei dieser Ausführungsform der Referenzsensor 38, über welchen dem Mikroprozessor 41 der Steuereinrichtung 40 die 0:00 Uhr-Durchgangsinformation als Referenzzeitpunkt übermittelt wird.

Aus diesen Zeitinformationen berechnet nun der Mikroprozessor 41 die tatsächlichen Schaltzeiten, welche beispielsweise auch in der Digitalanzeige 11 zu Kontrollzwecken anzeigbar sein können. Weiter ist aus Fig. 4 auch der Wahlschalter 14 mit seinen Schaltelementen 15 bis 21 erkennbar. Auch dieser Wahlschalter 14 ist mit der Steuereinrichtung 40 bzw. dessen Mikroprozessor 41 gekoppelt und liefert die notwendigen Informationen, welche der in den Programmbereichen 5 und 6 programmierten Schaltzeiten welchem Wochentag zuzuordnen sind. Auch für diese Zuordnung sind die Zeitinformationen des nicht flüchtigen Arbeitsspeicher 43 von Bedeutung, über welchen die gekennzeichneten Wochentage im Bereich des Wahlschalters 14 zuordenbar sind.

Es ist aus Fig. 4 ersichtlich, dass sich die beiden Schaltelemente 20 und 21 in ihrer linken Schaltposition befinden. Dementsprechend wird für die Tage Samstag und Sonntag (Sa, So) das im Programmbereich 5 programmierte Schaltprogramm zugeordnet, so dass zu den entsprechend berechneten Schaltzeitpunkten auch die entsprechenden Schaltvorgänge aktivierbar sind. Die Schaltelemente 15, 16, 17, 18 und 19 befinden sich in ihrer rechten Schaltposition, was bedeutet, dass den Tagen, Montag, Dienstag, Mittwoch, Donnerstag und Freitag die Schaltzeitpunkte des Programmbereiches 6 zugeordnet sind.

Des Weiteren wird durch die Steuereinrichtung 40 über den Mikroprozessor 41 beim vorliegenden Ausführungsbeispiel ein Lastrelais 46 zu entsprechenden Schaltzeitpunkten aktiviert bzw. deaktiviert, über welches wiederum ein entsprechender Verbraucher 47 ein- bzw. ausgeschaltet wird.

Weiter ist aus Fig. 4 noch die Taste 12 erkennbar, über welchen die Steuereinrichtung 40 in unterschiedliche Betriebsmodi schaltbar ist. Über einen externen Schalter 48 kann der Schaltzustand unabhängig vom aktuellen Zeitprogramm beeinflusst werden. Weiter weist die Schaltuhr 1 noch ein entsprechendes Netzteil 49 sowie eine eventuell notwendige, interne Spannungsversorgung 50 als Gangreserve auf. Dadurch kann die Schaltuhr 1 auch mit Datum und Uhrzeit vorprogrammiert werden.

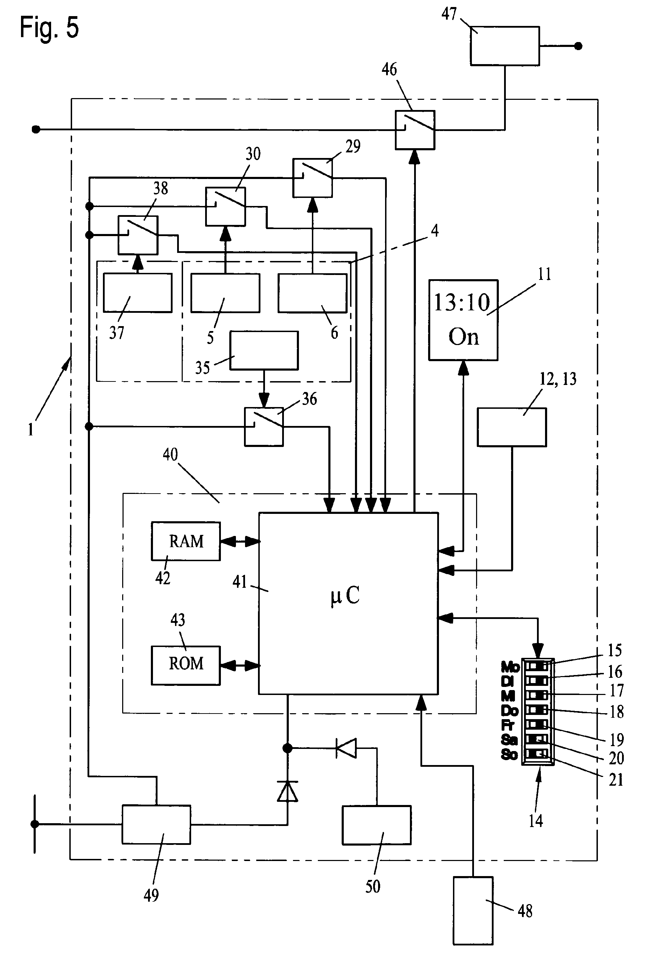

Fig. 5 zeigt ein weiteres Schaltbild einer weiteren Ausführungsform einer erfindungsgemäßen Schaltuhr 1. Diese Schaltuhr 1 weist gemäß des Ausführungsbeispiels nach Fig. 5 ebenfalls eine Steuereinrichtung 40 mit einem Mikroprozessor 41 und einem flüchtigen Arbeitsspeicher 42 sowie einem nichtflüchtigen Arbeitsspeicher 43 auf. Ebenfalls vorhanden ist die Digitalanzeige 11, der externe Schalter 48 sowie die Taste 12. In gleicher Art und Weise wie beim Ausführungsbeispiel gemäß Fig. 4 weist die Schaltuhr gemäß der Fig. 5 ebenfalls die Schaltscheibe 4 mit ihren beiden Programmbereichen 5 und 6 sowie die Referenzmarkierung 37 auf. Dem Programmbereich 5 und 6 und der Referenzmarkierung 37 sind ebenfalls der Schaltsensoren 29, 30 bzw. der Referenzsensor 38 zugeordnet. Über die Steuereinrichtung 40 mit ihrem Mikroprozessor 41 wird hier ebenfalls ein Schaltrelais 46 zum Schalten eines Verbrauchers 47 angesteuert. Auch der Wahlschalter 14 mit seinen Schaltelementen 15 bis 21 ist hier vorhanden.

Dabei weist das Ausführungsbeispiel gemäß Fig. 5 keinen Antriebsmotor mit Getriebe sondern statt dessen die vereinfacht dargestellte Strichcodierung 35 auf, welcher der Drehsensor 36 zugeordnet ist. Durch diese Strichcodierung 35 und den Drehsensor 36 werden in einem Programmiermodus beim manuellen Drehen der Schaltscheibe 4 Synchronisationsimpulse an die Steuereinrichtung 40 mit ihrem Mikroprozessor 41 übergeben, so dass hierdurch Drehwinkelinformationen zur Berechnung von Schaltzeiten zur Verfügung stehen. Die Funktionsweise der Referenzmarkierung 37 zusammen mit dem Referenzsenor 38 besteht darin, dass hierdurch beispielsweise ein 0.00 Uhr-Durchgang registrierbar ist, so dass die Schaltzeiten eindeutig berechenbar sind. Auch beim Ausführungsbeispiel gemäß der Fig. 5 sind die in den Programmbereichen 5 und 6 programmierten Schaltzeiten über den Wahlschalter 14 und dessen Schaltelemente 15 bis 21 den unterschiedlichen Wochentagen, wie oben beschrieben, zuzuordnen.

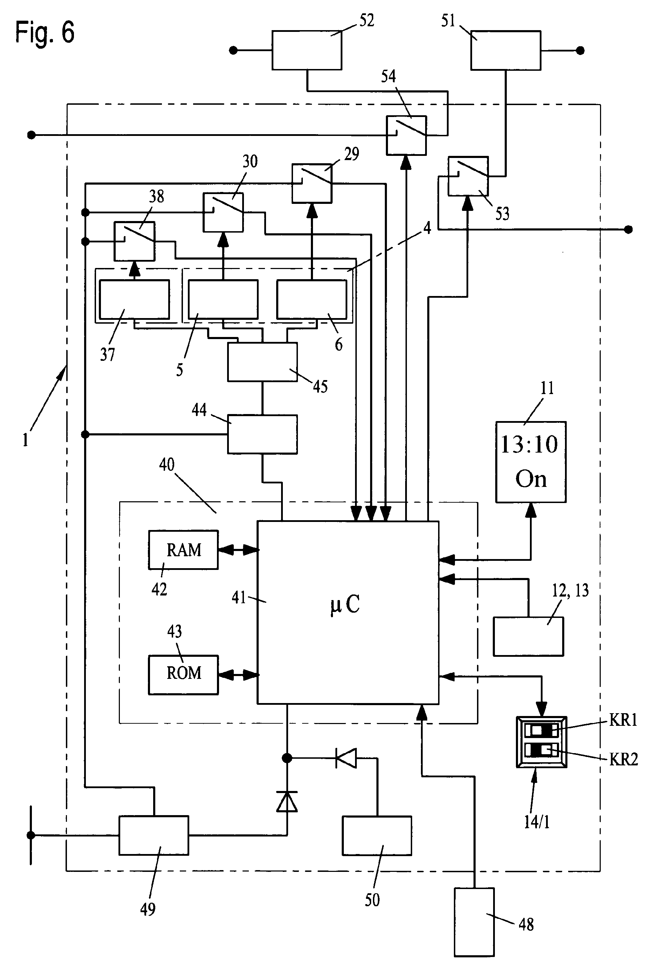

Fig. 6 zeigt ein Anwendungsbeispiel einer erfindungsgemäßen Schaltuhr 1, deren Aufbau im Wesentlichen dem Aufbau des Ausführungsbeispiels gemäß Fig. 4 entspricht. Dementsprechend wurde in Fig. 6 auch dieselben Bezugszeichen für dieselben Bauteile verwendet. Insbesondere ist auch diesbezüglich die Beschreibung zur Fig. 4 auf das Ausführungsbeispiel der Fig. 6 lesbar.

Beim Ausführungsbeispiel der Fig. 6 der Schaltuhr 1 ist der Wahlschalter 14 in einer abgewandelten Form 14/1 vorhanden. Mittels dieses Wahlschalters 14/1 sind die programmierten Schaltprogramme der Schaltbereiche 5 und 6 wahlweise zwei unterschiedlichen Verbrauchern 51 und 52 und somit zwei unterschiedlichen Lastkreisen zuordenbar. Diese Verbraucher 51 und 52 werden dabei durch entsprechende Schaltrelais 53 und 54 geschaltet.

Dabei weist der Wahlschalter 14/1 zwei Schaltelemente KR1 und KR2 auf, welche dem jeweiligen Verbraucher 51 bzw. 52 zugeordnet sind. Befindet sich beispielsweise, wie in Fig. 6 dargestellt, das Schaltelement KR1 in seiner rechten Stellung, so wird das im Programmbereich 6 programmierte Schaltprogramm auf den Verbraucher 51 über dessen Schaltrelais 53 aufgeschaltet. Im Gegensatz hierzu befindet sich das Schaltelement KR2 in seiner linken Auswahlposition, so dass das Schaltprogramm des Programmbereiches 5 auf den Verbraucher 52 über dessen Schaltrelais 54 aufschaltbar ist. Bei entsprechend gleicher Stellung der Schaltelemente KR1 und KR2 wird dementsprechend dasselbe Schaltprogramm des Programmbereiches 5 oder des Programmbereiches 6 auf beide Verbraucher 51 und 52 aufgeschaltet.

Es ist erkennbar, dass mit einer Schaltuhr der erfindungsgemäßen Art und entsprechend minimaler Anpassung der elektronischen Schaltung, diese Schaltuhr auch als Zweikanalschaltuhr zum unabhängigen Schalten zweier Verbraucher 51 und 52 einsetzbar ist. Dabei ist das jeweilige Schaltprogramm der Programmbereiche 5 oder 6 wahlweise und unabhängig voneinander dem jeweiligen Verbraucher 51 und 52 zuordenbar.

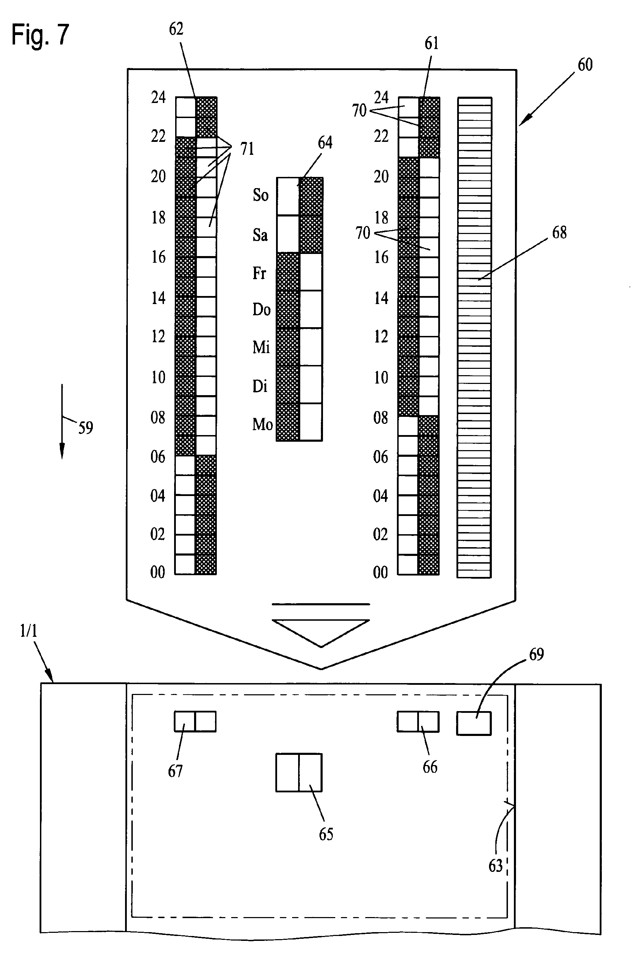

Fig. 7 zeigt beispielhaft einen weiteren Programmträger 60, welcher als Codekarte ausgebildet ist. Diese Codekarte 60 weist beim vorliegenden Ausführungsbeispiel zwei Programmbereiche 61 und 62 auf, welche äquivalent zu den Programmbereichen 5 und 6 der Schaltscheibe 4 für eine Schaltzeitprogrammierung vorgesehen sind.

Die Codekarte 60 ist in Richtung des Pfeiles 59 in das Gehäuse einer Schaltuhr 1/1 einschiebbar, wozu diese ein entsprechendes Einschubfach 63 aufweist. Dabei sind die beiden Programmbereiche 61 und 62 in Richtung des Pfeiles 59 spaltenförmig angeordnet und in Zeitabschnitte unterteilt. Diese Zeitabschnitte sind beim vorliegenden Ausführungsbeispiel seitlich mit Ziffern gekennzeichnet, welche unterschiedliche Schaltzeiten darstellen. Zwischen diesen Programmbereichen 61 und 62 ist eine Wochentagscodierung 64 vorgesehen, welche zusammen mit einem Tagessenor 65, welcher im Bereich des Einschubfaches 63 der Schaltuhr 1/1 angeordnet ist, als Wahlschalter fungiert. Hier könnte auch ein Wahlschalter 14 gemäß des Ausführungsbeispiels der Schaltuhr 1 aus Fig. 1 vorgesehen sein. Des Weiteren sind im Einschubfach 63 zwei Schaltsensoren 66 und 67 vorgesehen, deren Anordnung im Einschubfach 63 dem Abstand der beiden Programmbereiche 61 und 62 der Codekarte 60 entspricht. Weiter verläuft im rechten Seitenbereich eine Strichcodierung 68 parallel zu beiden Programmbereichen 61 und 62 sowie parallel zur ebenfalls spaltenförmig angeordneten Wochentagscodierung 64.

Der Strichcodierung 68 ist innerhalb des Einschubfaches 63 ein weiterer Synchronisationssenor 69 zugeordnet, so dass über die Strichcodierung 68 und den Synchronisationssenor 69 eine Zuordnung der Programmierung der Programmbereiche 61 und 62 zu definierten Schaltzeiten möglich ist.

Dies bedeutet, dass beim Einschieben der Codekarte 60 in das Einschubfach 63 durch die Sensoren 65, 66, 67 und 69 entsprechende Signale an die Steuereinrichtung mit ihrem Mikroprozessor gegeben werden, woraus wiederum effektive Schaltzeiten berechenbar sind.

Diese Ausführungsform gemäß der Fig. 7 entspricht in ihrer Funktionsweise etwa der Ausführungsform der Fig. 5, wobei hier eine Modifikation des Wahlschalters in Form der Wochentagscodierung 64 zusammen mit dem Tagessensor 65 gewählt ist. Ansonsten ist die Funktionsweise dieses Ausführungsbeispiels identisch gemäß dem Ausführungsbeispiel nach Fig. 5.

Wie aus Fig. 7 weiter ersichtlich ist, sind die einzelnen Abschnitte 70 und 71 der Programmierbereiche 61 und 62 unterschiedlich markierbar, was in Fig. 7 durch die dunklen Schraffuren erkennbar ist. Jede dieser Schraffuren bestimmt verschiedene Schaltzustände zum Ein- bzw. Ausschalten eines Verbrauchers, welche durch die beiden Schaltsensoren 66 und 67 beim Einschieben der Codekarte 60 erfasst und an die Steuereinrichtung weitergegeben werden.

Wird eine solche Codekarte 60 derart ausgestaltet, dass die markierten Felder jederzeit wieder entfernt und neu manuell beschrieben werden können, so ist auch hier eine einfache Umprogrammierung der Schaltuhr 1/1 durchführbar. Wird die Programmierung der Programmbereiche 61, 62 sowie der Wochentagscodierung 64 permanent vorgenommen, so kann eine Neuprogrammierung durch einfaches Austauschen der Codekarten 60 erfolgen.

Alternativ zu dieser Ausgestaltung können die Wochentagscodierung wie auch die Programmbereiche 61 und 62 beispielsweise auch in Form von Schiebe- oder Klappelementen ausgebildet sein.

Es ist erkennbar, dass durch die erfindungsgemäße Ausgestaltung die Vorteile einer mechanischen Programmierung einer Schaltuhr mit den Vorteilen einer elektronischen Steuerung von Schaltvorgängen effizient und einfach kombiniert ist. Dabei ist es in einfachster Weise möglich unterschiedliche Schaltzeiten entweder unterschiedlichen Wochentagen oder unterschiedlichen Schaltkreisen zuzuordnen, ohne dass hierfür irgendwelche komplizierten Programmiergänge vom Endverbraucher vorgenommen werden müssen.

## Patentansprüche

1. Mechanisch programmierbare Schaltuhr (1, 1/1) mit einer programmierbaren Steuereinrichtung (40), die einen Mikroprozessor (41) sowie einen elektronischen Speicher (42, 43) aufweist und durch welche zeitabhängige Schaltvorgänge steuerbar sind, wobei zur Vorgabe unterschiedlicher Schaltzeiten ein mechanisch manuell programmierbarer Programmträger (4, 60) vorgesehen ist, dessen programmierte Schaltzeiten sensorisch erfassbar, der Steuereinrichtung (40) übergebbar und dort speicherbar sind und wobei in der Steuereinrichtung (40) Zeitinformationen ablegbar sind, aus welchen der Mikroprozessor (41) konkrete Schaltzeitpunkte berechnet und über die Steuereinrichtung (40) entsprechende Schaltvorgänge bewirkt,
**dadurch gekennzeichnet,**
**dass** der Programmträger (4, 60) mehrere Programmbereiche (5, 6, 61, 62) aufweist, welche unabhängig voneinander manuell programmierbar sind und,
**dass** die jeweilige Programmierung der Programmbereiche (5, 6, 61, 62) von unabhängigen, dem jeweiligen Programmbereich (5, 6, 61, 62) zugeordneten Schaltsensoren (29, 30, 66, 67) auslesbar ist und in einem Arbeitsspeicher (42) als voneinander unabhängige Schaltzeiten ablegbar ist und,
**dass** wenigstens ein Wahlschalter (14, 14/1, 64, 65) vorgesehen ist, durch welchen die Schaltzeiten der einzelnen Schaltbereiche (5, 6, 61, 62) wahlweise verschiedenen Lastkreisen (47, 51, 52) und/oder verschiedenen Wochentagen (Mo, Di, Mi, Do, Fr, Sa, So) zum Bewirken eines Schaltvorgangs zuordenbar sind.

2. Vorrichtung nach Anspruch 1, **dadurch gekennzeichnet, dass** die Programmbereiche des Programmträgers (4, 60) als erster und zweiter Programmbereich (5, 6, 61, 62) ausgebildet sind, welche unabhängig voneinander manuell programmierbar sind und, dass die jeweilige Programmierung der beiden Programmbereiche (5, 6, 61, 62) von zwei unabhängigen Schaltsensoren (29, 30, 66, 67) auslesbar ist und in einem Arbeitsspeicher (42) als erste und zweite Schaltzeiten ablegbar sind und,
dass wenigstens ein Wahlschalter (14, 14/1, 64 und 65) vorgesehen ist, durch welchen die ersten und zweiten Schaltzeiten wahlweise verschiedenen Lastkreisen (47, 51, 52) und/oder verschiedenen Wochentagen (Mo, Di, Mi, Do, Fr, Sa, So) zum Bewirken eines Schaltvorgangs zuordenbar sind.

3. Schaltuhr nach Anspruch 1 oder 2, **dadurch gekennzeichnet, dass** der Programmträger als Schaltscheibe (4) ausgebildet ist und die beiden Programmbereiche (5, 6) der Schaltscheibe (4) aus einer ersten und zweiten Schalteinheit (25, 26) bestehen, welche jeweils mit steckbaren Schaltreitern oder gleichmäßig am Umfang verteilt angeordneten Schaltelementen (7, 8) versehen sind, welche in unterschiedliche Schaltpositionen steckbar oder verstellbar sind.

4. Schaltuhr nach Anspruch 3, **dadurch gekennzeichnet, dass** die Schalteinheiten (25, 26) eine einheitliche Schaltscheibe (4) bilden, welche drehbar in einem Gehäuse (2) der Schaltuhr (1) gelagert ist.

5. Schaltuhr nach Anspruch 4, **dadurch gekennzeichnet, dass** die Schaltscheibe (4) zur Erfassung ihrer Drehwinkelstellung und ihrer Drehbewegung eine kreisringförmige Codierung (35) mit einem Drehsensor (36) aufweist, dessen Messsignale dem Mikroprozessor (41) der Steuereinrichtung (40) zur Ermittlung der programmierten Schaltzeitpunkte zuführbar sind.

6. Schaltuhr nach einem der Ansprüche 3 bis 5, dass der erste Sensor (29) im Umfangsbereich der ersten Schalteinheit (25) und der zweite Sensor (30) im Umfangsbereich der zweiten Schalteinheit (26) angeordnet ist und,
dass die Schaltpositionen der Schaltreiter oder der Schaltelemente (7, 8) während einer Umdrehung der Schaltscheiben von wenigstens 360° von den Sensoren (29, 30) erfasst und als Schaltsignal dem Mikroprozessor (41) zuführbar sind.

7. Schaltuhr nach Anspruch 1 oder 2, **dadurch gekennzeichnet, dass** als Programmträger eine Codekarte (60) vorgesehen ist, welche mit mehreren die Programminformationen in Form von manuell veränderbaren Markierungen (70, 71) enthaltenden, spaltenförmigen Programmbereichen (61, 62) versehen ist und,
dass die Codekarte in ein Einschubfach (63) der Schaltuhr (1/1) einschiebbar ist und,
dass jedem Programmbereich (61, 62) innerhalb des Einschubfaches (63) ein Schaltsensor (66 bzw. 67) zugeordnet ist, durch welche während des Einschiebens der Codekarte (60) die Programmierung auslesbar und an die Steuereinrichtung (40) übergebbar ist.

8. Schaltuhr nach Anspruch 7, **dadurch gekennzeichnet, dass** der Wahlschalter als auf der Codekarte (60) angebrachte und manuell veränderbare Wochentagcodierung (64) und einem zugehörigen, die Codierung auslesenden Tagessensor (65) gebildet ist.

9. Schaltuhr nach Anspruch 7 oder 8, **dadurch gekennzeichnet, dass** die Codekarte (60) eine spaltenförmig angebrachte Strichcodierung (68) aufweist, welche durch einen im Einschubfach angeordneten Synchronisationssensor (69) während des Einschiebens auslesbar und der Steuereinrichtung (40) als Referenzsignal zur Berechnung der Schaltzeiten übergebbar ist.

10. Schaltuhr nach einem der Ansprüche 1 bis 9, **dadurch gekennzeichnet, dass** eine automatische Sommer/-Winterzeit-Umschaltung vorgesehen ist.

11. Schaltuhr nach Anspruch 10, **dadurch gekennzeichnet, dass** die automatische Sommer/-Winterzeit-Umschaltung wahlweise aktivierbar und deaktivierbar ist.
